# FASCICULE DE BREVET EUROPEEN

(11) **EP 1 441 939 B1**
(45) Date de publication et mention de la délivrance du brevet: **17.02.2010**
(21) Numéro de dépôt: 02793183.1
(22) Date de dépôt: 23.10.2002
(51) Int. Cl.: B60T 11/26, B60T 17/22, G01F 23/30

(54) **RESERVOIR COMPACT POUR SYSTEME DE FREINAGE ELECTRO-HYDRAULIQUE**
KOMPAKTER BEHÄLTER FÜR EIN ELEKTROHYDRAULISCHES BREMSSYSTEM
COMPACT TANK FOR AN ELECTROHYDRAULIC BRAKING SYSTEM

(30) Priorité: 25.10.2001 FR 0114078
(43) Date de publication de la demande: 04.08.2004
(73) Titulaire: ROBERT BOSCH GMBH, 70442 Stuttgart (DE)
(72) Inventeur: FRAISSE, Emmanuel, F-75011 Paris (FR); GAFFE, François, F-93110 Rosny sous Bois (FR); DELAGE, Jean-Pierre, F-94160 Saint Mande (FR); COME, Philippe, F-60300 Senlis (FR)
(74) Mandataire: Hurwic, Aleksander Wiktor
(86) Numéro de dépôt international: PCT/FR2002/003635
(87) Numéro de publication internationale: WO 2003/039931

(56) Documents cités:
- DE-A- 3 724 896
- DE-A- 4 029 931
- DE-C- 4 312 063
- US-A- 6 105 611

## Description

La présente invention se rapporte principalement à un réservoir compact pour alimenter en liquide de frein un système de freinage hydraulique et plus particulièrement à un réservoir assurant à la fois l'alimentation en liquide de frein en fonctionnement normal et en fonctionnement dégradé d'un circuit de freinage électro-hydraulique. Le document DE 4312063 C1 decrit un reservoir qui comporte deux chambres.

Un système de freinage électro-hydraulique comporte de manière connue un circuit de freinage alimentant en liquide de frein sous pression des freins disposés au niveau de roues, ledit circuit étant lui-même alimenté en fonctionnement normal par une pompe hydraulique commandée par un calculateur électronique, et en fonctionnement dégradé par un maître-cylindre hydraulique. Le calculateur reçoit de différents capteurs, par exemple de course disposés au niveau d'une pédale de frein, l'information d'une volonté de ralentir, d'immobiliser le véhicule ou de maintenir celui-ci à une vitesse constante le véhicule, la pédale de frein étant reliée à une extrémité longitudinale d'une tige d'actionnement, dont la seconde extrémité longitudinale est reliée à un piston hydraulique du maître-cylindre. Le maître-cylindre comporte des moyens de simulation pédale, reproduisant en fonctionnement normal la réaction hydraulique d'un circuit de freinage classique.

Dans certains cas exceptionnels, la pompe ou le calculateur est susceptible d'être indisponibles, le maître-cylindre alimente alors directement les freins en liquides de frein sous pression.

Pour des raisons de sécurité, la pompe hydraulique est alimentée en liquide de frein par un premier réservoir et le maître-cylindre est alimenté en liquide de frein par un second réservoir. Ainsi en cas de fuite, par exemple du premier réservoir, le volume de liquide de frein contenu dans le second réservoir n'est pas modifié et permet un freinage en toute sécurité du véhicule. De plus, la législation impose de prévoir dans chaque réservoir un dispositif de détection d'un niveau trop faible de liquide de frein pour un fonctionnement sûr du circuit de système de freinage, avertissant en cas de niveau trop faible de liquide de frein le conducteur par exemple par un signal lumineux au niveau du tableau de bord.
Cependant ceci pose des problèmes d'encombrement puisque la place disponible dans le compartiment moteur est de plus en plus réduite, et pose également des problèmes de coût et de complexité de montage du fait du prix de revient important des dispositifs de détection de niveau de liquide de frein et du montage électrique pour relier ceux-ci au dispositif d'alarme.

C'est par conséquent un but de la présente invention d'offrir des moyens d'alimentation sûrs en liquide de frein d'un circuit de freinage électro-hydraulique à encombrement réduit.

C'est également un but de la présente invention d'offrir des moyens d'alimentation sûrs en liquide de frein d'un circuit de freinage électro-hydraulique d'un faible prix de revient.

C'est également un but de la présente invention d'offrir des moyens d'alimentation sûrs en liquide de frein d'un circuit de freinage électro-hydraulique à montage simplifié.

Ces buts sont atteints par un réservoir selon la présente invention pour système de freinage électro-hydraulique alimentant à la fois un maître-cylindre et une pompe hydraulique, et comportant au moins un détecteur de niveau de liquide de frein, et remplissant les mêmes exigences de sécurité que deux réservoirs indépendants munis chacun d'un détecteur de niveau.

En d'autres termes, le réservoir selon la présente invention comporte au moins une première, une deuxième et une troisième chambres, les premières et deuxième chambres alimentant le maître-cylindre et la troisième chambre alimentant la pompe hydraulique, le réservoir comporte des moyens de mise en communication des première, deuxième et troisième chambres lorsque le niveau de liquide de frein contenu dans le réservoir est supérieur à un niveau prédéterminé et des moyens d'isolation de manière étanche desdites chambres lorsque le niveau de liquide de frein contenu dans une des chambres est inférieur au dit niveau prédéterminé, le réservoir comporte également au moins un détecteur de niveau de liquide de frein détectant une baisse de niveau dans l'une des chambres.

L'invention a principalement pour objet un réservoir de liquide de frein pour système de freinage comportant une enveloppe définissant un volume intérieur, un orifice de remplissage, au moins un orifice d'écoulement, une première chambre d'alimentation d'un circuit hydraulique primaire, une deuxième chambre d'alimentation d'un circuit hydraulique secondaire, un détecteur d'un niveau de fluide hydraulique contenu dans ledit réservoir inférieur à un niveau minimum caractérisé en ce qu'il comporte également une troisième chambre d'alimentation d'une pompe hydraulique et des moyens assurant la communication entre la première, deuxième et troisième chambres pour un niveau de fluide hydraulique supérieure à un niveau de sécurité et la séparation de manière étanche desdites chambres pour un niveau de fluide Hydraulique inférieur au niveau de sécurité, le niveau étant inférieur ou égal au niveau minimum.

L'invention a aussi pour objet un réservoir caractérisé en ce qu'il comporte une quatrième chambre de mesure, recevant le détecteur de niveau de fluide hydraulique.

L'invention a aussi pour objet un réservoir caractérisé en ce que la quatrième chambre est disposée sensiblement au centre dudit réservoir.

L'invention a aussi pour objet un réservoir caractérisé en ce que la quatrième chambre est séparée des première, deuxième et troisième chambres par une paroi comportant des canaux mettant en communication avec ladite quatrième chambre.

L'invention a aussi pour objet un réservoir caractérisé en ce que les canaux sont disposés relativement entre le niveau de sécurité et le niveau minimum.

L'invention a aussi pour objet un réservoir caractérisé en ce que la quatrième chambre est entourée par un canal annulaire en communication avec les chambres.

L'invention a aussi pour objet un réservoir hydraulique caractérisé en ce que les moyens assurant la communication entre la première, deuxième et troisième chambres pour un niveau de fluide hydraulique supérieure au niveau de sécurité et la séparation de manière étanche desdites chambres pour un niveau de fluide hydraulique inférieur au niveau de sécurité sont formés par des séparations s'étendant de manière étanche de la paroi inférieure vers la paroi supérieure du réservoir sur une hauteur inférieure à la distance entre la partie inférieure du réservoir et la partie supérieure du réservoir et disposées entre les première, deuxième et troisième chambres et formant entre leur extrémité supérieure et la partie supérieure du réservoir des orifices de communications entre lesdites première, deuxième et troisième chambres.

L'invention a aussi pour objet un réservoir caractérisé en ce que les séparations s'étendent entre les première, deuxième et troisième chambres et le canal annulaire.

L'invention a aussi pour objet un réservoir hydraulique caractérisé en ce que la troisième chambre comporte pratiquée dans la partie supérieure du réservoir un orifice de retour de liquide de frein destiné à être raccordé à une canalisation de retour du liquide de frein d'un circuit de freinage.

L'invention a aussi pour objet un système de freinage électro-hydraulique comportant un organe de freinage du type de celui d'une pédale de frein, des moyens de détection, un calculateur élaborant une consigne de contrôle pour une pompe hydraulique délivrant du liquide de frein à au moins un frein disposé au niveau d'une roue du véhicule suite à la détection par les moyens de détection d'une action du conducteur sur l'organe de freinage, un maître-cylindre relié au frein caractérisé en ce qu'il comporte également un réservoir selon l'une quelconque des revendications précédentes.

La présente invention sera mieux comprise à l'aide de la description qui suit et des dessins annexés pour lesquels
La figure 1 est une vue de dessus d'un mode préféré de réalisation d'un réservoir selon la présente invention;
La figure 2 est une vue en coupe dans le plan de la figure 1;
La figure 3 est un schéma d'un système de freinage électro-hydraulique comportant un réservoir selon la présente invention.

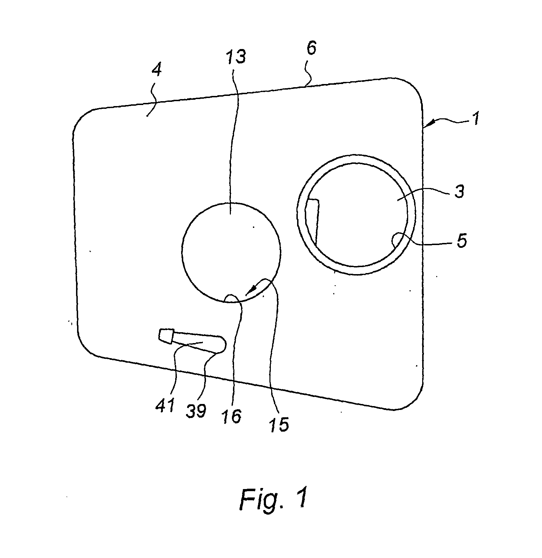

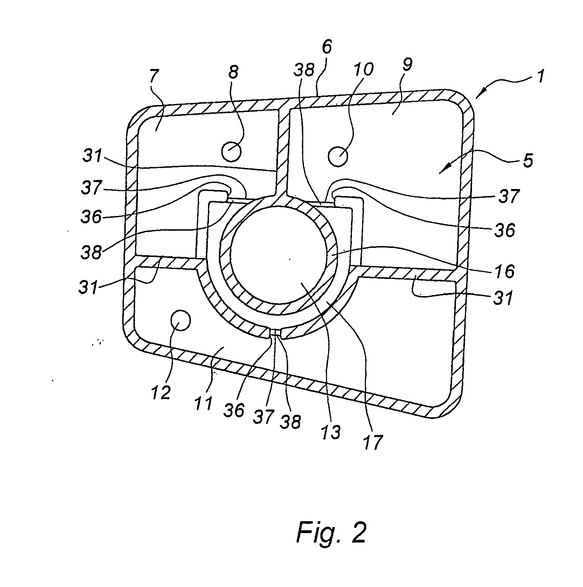

Sur les figures 1 et 2, on peut voir le mode préféré de réalisation d'un réservoir R selon la présente invention comportant une enveloppe 1 définissant un volume intérieur 3, munie d'un orifice de remplissage 5 pratiqué dans une paroi supérieure 4 de l'enveloppe 1 et mettant en communication le volume intérieur 3 avec l'extérieur, l'orifice de remplissage 5 étant susceptible d'être obturé par un moyen d'obturation de manière étanche, par exemple un bouchon.
Le réservoir R comporte également des indications de niveau minimum m et maximum M de liquide de frein contenu dans le réservoir prescrites par le fabricant du système de freinage pour le bon fonctionnement du circuit de freinage, les indications m et M étant repérées sur une paroi latérale 6 du réservoir R raccordant de manière étanche la paroi supérieure 4 du réservoir R à une paroi inférieure 8 du réservoir R et visibles par le conducteur pour une vérification visuelle. Le réservoir R est avantageusement réalisé en deux parties, une partie inférieure 45 et une partie supérieure 47 formant un réservoir R étanche, avantageusement soudées l'une à l'autre, et le réservoir R est avantageusement réalisé par moulage et en matière plastique transparente pour une vérification visuelle du niveau de liquide de frein contenu dans le réservoir R et avantageusement par moulage.

Le volume intérieur 3 est divisé en au moins trois chambres, avantageusement quatre chambres. Une première chambre 7 alimente en liquide de frein un circuit hydraulique primaire d'un maître-cylindre (non représenté), une deuxième chambre 9 alimente en liquide de frein un circuit hydraulique secondaire du maître-cylindre cylindre (non représenté), une troisième chambre 11 alimente en liquide de frein une pompe hydraulique et une quatrième chambre de mesure 13 reçoit un dispositif dé détection du niveau de liquide de frein contenu dans le réservoir R, ce dispositif indiquant que le volume de liquide de frein contenu dans le réservoir R a un niveau inférieur au niveau m.

Les chambres 7, 9 et 11 alimentent respectivement le circuit hydraulique primaire, le circuit hydraulique secondaire et le circuit de freinage par des moyens de communication étanches (non représentés) disposés dans le fond du réservoir R, plus particulièrement dans le fond de chacune des chambres 7, 9 et 11.
La chambre 11 alimentant le circuit de freinage en fonctionnement normal a avantageusement un volume plus important relativement aux chambres 7, 9, 13 puisque la pompe hydraulique aspirant le liquide dans la chambre 11 nécessite un volume de fonctionnement de liquide de frein plus important.

La chambre 13 est délimitée par un manchon 16 s'étendant de la partie supérieure du réservoir R à la partie inférieure du réservoir R et en communication avec l'extérieur au moyen d'un orifice 15 formé sur la partie supérieure du réservoir R.

La chambre de mesure 13 communique avec les chambres d'alimentation 7, 9, 11 au moyen de passages 14, avantageusement de faible diamètre pratiqués dans la paroi du manchon 15 entre les chambres 7,9 et 11 et la chambre de mesure 13. Les passages 14 sont disposés à un niveau inférieur au niveau m et avantageusement à un niveau supérieur à un niveau s de sécurité, les passages 14 permettant ainsi d'isoler de manière étanche les chambres 7, 9, 11 de la chambre de mesure 13 en cas de fuite de la chambre de mesure 13 et un volume de sécurité pour le fonctionnement du circuit de freinage.

La quatrième chambre 13 est avantageusement de faible volume relativement à ceux des première, deuxième et troisième chambres 7,9 et 11 et permet avantageusement de limiter les variations de niveau du volume de liquide de frein en contact avec le détecteur de niveau lors du déplacement du véhicule équipé du réservoir R et donc d'éviter un déclenchement intempestif du détecteur de niveau. En effet le volume de mesure est confiné dans la chambre de mesure 13 et le passage du liquide de frein des chambres 7,9,11 vers la chambre 13 est ralenti par les passages 14 de faible diamètre. Ainsi, par exemple lors de fortes accélérations ou décélérations, le niveau de liquide de frein contenu dans la chambre de mesure est peu influencé par le déplacement du liquide frein dans les chambres 7, 9, 11.

Dans l'exemple préféré de réalisation du réservoir R selon la présente invention la chambre de mesure 13 est avantageusement disposée sensiblement dans la partie centrale du réservoir R et est avantageusement entourée par un canal annulaire 17 dans lequel débouchent les passages 14 et mettant en communication à la fois les chambres 7,9 et 11 et les chambres 7,9 et 11 avec la chambre 13.

Les chambres 7, 9 et 11 sont avantageusement séparées par des parois 31 s'étendant de la paroi inférieure 8 du réservoir R jusqu'à la paroi supérieure 4 du réservoir R pour rigidifier le réservoir R, les parois 31 séparent avantageusement de manière étanche les chambres 7, 9, 11 qui communiquent alors uniquement au moyen du canal annulaire 17.
La communication entre les chambres 7, 9 et 11 et la chambre d'alimentation 17 est de préférence limitée par des séparations 37 s'étendant de la paroi inférieure 8 du réservoir R sur une hauteur inférieure à la distance séparant la partie supérieure 4 du réservoir R de la partie inférieure 8 du réservoir R, et formant entre leur extrémité supérieure 38 et la partie supérieure 4 du réservoir R des orifices 36 de communication entre première, deuxième et troisième chambres (7,9,11) et le canal annulaire (17), la hauteur des séparations 37 correspondant au niveau s de sécurité de liquide de frein de fonctionnement du circuit de freinage. Le niveau s est inférieur ou égal au niveau minimum m de remplissage repéré sur la paroi latérale du réservoir R et au-dessous duquel le dispositif de détection d'un manque de liquide frein prévient le conducteur de cette anomalie. Ainsi lors d'une fuite dans une des chambres 7, 9 ou 11, un volume minimum de liquide de frein est assuré dans les chambres 7,9 et 11 ne comportant pas de fuite.

La chambre 11 d'alimentation comporte dans sa partie supérieure un orifice de réalimentation 39 en liquide de frein, le liquide de frein étant renvoyé à la fin d'une action de freinage. L'orifice 39 se prolonge de manière étanche avantageusement vers l'extérieur par une pipe 41 reliée de manière étanche à un conduit du circuit de freinage et vers l'intérieur par un conduit d'écoulement (non représenté).

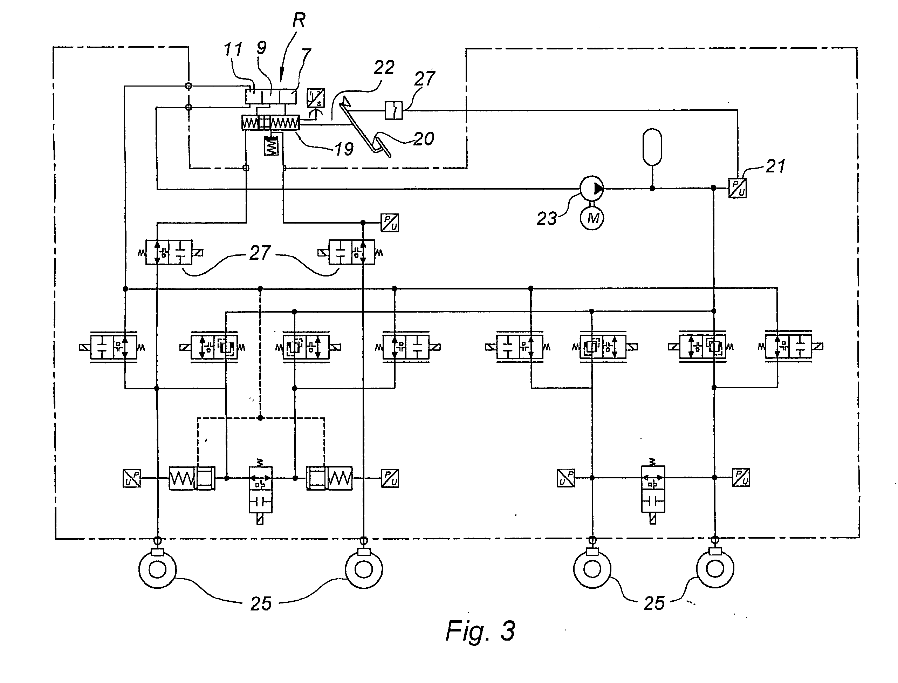

Sur la figure 3 on peut voir un circuit de freinage électro-hydraulique comportant un réservoir R selon la présente invention, comportant également un maître-cylindre 19 actionné par une tige d'actionnement 22 reliée à une pédale de frein 20 destiné à être déplacée par le conducteur, des moyens de détection 27 du déplacement de la pédale de frein et/ou de la tige d'actionnement, par exemple des capteurs de déplacement, un calculateur 21 élaborant un ordre de contrôle à partir des informations fournies par les moyens de détection, ledit ordre de contrôle étant transmis à une pompe hydraulique 23 qui aspire le liquide de frein de la chambre 11 et l'envoie sous pression vers des freins 25 disposés au niveau de roues. Le calculateur 21 commande également des électrovannes 27 interrompant, en fonctionnement normal, la communication entre le maître-cylindre 19 et les freins 25. Au repos, c'est-à-dire en dehors d'une phase d'actionnement des freins par une commande du calculateur, les électrovannes 27 sont ouvertes, ainsi en cas de dysfonctionnement du calculateur 21 ou de la pompe 23 par exemple le maître-cylindre est en communication avec les freins et l'appui par le conducteur sur une pédale de frein commandant le maître-cylindre au moyen d'une tige d'actionnement, permet d'envoyer du liquide de frein sous pression au frein et donc de freiner le véhicule.

Nous allons maintenant expliquer de quelle manière la sécurité est assurée en cas de fuite d'une des chambres du réservoir R selon la présente invention.
En fonctionnement normal la pompe 23 aspire le liquide de frein dans la chambre 11 et l'envoie vers les freins afin de provoquer le freinage. En fonctionnement dégradé, par exemple lorsque la pompe n'est plus actionnée soit à cause d'un mauvais fonctionnement de la pompe elle-même, soit d'un mauvais fonctionnement du calculateur les freins sont actionnés par le maître-cylindre, le liquide de frein s'écoulant des chambres 7 et 9. Le détecteur de liquide de frein, formé par exemple par un circuit électrique fermé par un flotteur conducteur lorsque le niveau de liquide de frein est suffisant, est disposé dans la chambre de mesure 13 et relié à une unité de traitement par exemple le calculateur et permet d'indiquer une fuite dans le réservoir par ouverture du circuit électrique par éloignement du flotteur astreint au niveau de liquide frein contenu dans la chambre de mesure 13.

En fonctionnement normal les chambres 7,9,11 et 13, ainsi que le canal annulaire 17 sont au même niveau de remplissage. En cas de fuite de la chambre 7, 9, 11 ou 13 ou du canal annulaire 17, les volumes de liquide de frein contenus dans chacune des chambres 7,9,11 et 13 diminuent et donc les niveaux des chambres 7,9,11 et 13 s'abaissent simultanément dans les chambres 7, 9, 11, 13 jusqu'au niveau de sécurité s.
Lorsque le niveau s est atteint, correspondant à l'extrémité supérieure des séparations 37, les chambres 7,9,11 et 13 sont isolés de manière étanche par les séparations 37 permettant aux chambres intactes de contenir un volume de liquide de frein suffisant pour assurer le fonctionnement de circuit de freinage ou au moins d'assurer un certain niveau de freinage suffisant pour arrêter le véhicule. Le niveau de sécurité s étant inférieur ou égal au niveau minimum m de liquide de frein pour lequel le détecteur détecte un manque de liquide de frein, le détecteur prévient alors le conducteur de la fuite par exemple par un signal lumineux ou un signal visuel ou sonore dans l'habitacle que le volume de liquide de frein contenu dans le réservoir R n'est plus suffisant pour assurer un fonctionnement optimum des freins.

On a par conséquent bien réalisé un réservoir d'alimentation en liquide de frein compact d'un circuit de freinage pour système de freinage électro-hydraulique sûr, puisqu'il permet à la fois une détection simple et efficace d'un volume de liquide de frein trop faible contenu dans le réservoir et d'assurer un volume de sécurité de fonctionnement du système de freinage. De plus il est également peu encombrant et d'un prix de revient faible puisqu'il ne comporte qu'un seul dispositif de détection du niveau de liquide de frein, réduisant par la même et le coût et la complexité du montage dudit réservoir dans le compartiment moteur, et qu'il est réalisé en deux étapes de moulage.

La présente invention s'applique notamment à l'industrie automobile.

La présente invention s'applique principalement à l'industrie des systèmes de freinage pour véhicule automobile et notamment pour voiture particulière.

## Revendications

1. Réservoir de liquide de frein pour système de freinage comportant une enveloppe définissant un volume intérieur (3), un orifice de remplissage, au moins un orifice d'écoulement, une première chambre (7) d'alimentation d'un circuit hydraulique primaire, une deuxième chambre (9) d'alimentation d'un circuit hydraulique secondaire, un détecteur d'un niveau de fluide hydraulique contenu dans ledit réservoir (R) inférieur à un niveau minimum (m) **caractérisé en ce qu'**il comporte également une troisième chambre (11) d'alimentation d'une pompe hydraulique (23) et des moyens assurant la communication entre la première, deuxième et troisième chambres pour un niveau de fluide hydraulique supérieure à un niveau de sécurité (s) et la séparation de manière étanche desdites chambres pour un niveau de fluide Hydraulique inférieur au niveau de sécurité (s), le niveau (s) étant inférieur ou égal au niveau minimum (m).

2. Réservoir selon la revendication 1 **caractérisé en ce qu'**il comporte une quatrième chambre (13) de mesure, recevant le détecteur de niveau de fluide hydraulique.

3. Réservoir selon la revendication 2 **caractérisé en ce que** la quatrième chambre (13) est disposée sensiblement au centre dudit réservoir (R).

4. Réservoir selon la revendication 2 ou 3 **caractérisé en ce que** la quatrième chambre est séparée des première, deuxième et troisième chambres (7,9,11) par une paroi (15) comportant des canaux (14) mettant en communication les première, deuxième et troisième chambres (7,9,11) avec ladite quatrième chambre (13).

5. Réservoir selon la revendication 4 **caractérisé en ce que** les canaux (14) sont disposés relativement entre le niveau de sécurité (s) et le niveau minimum (m).

6. Réservoir selon l'une quelconque des revendications 2 à 5 **caractérisé en ce que** la quatrième chambre (13) est entourée par un canal annulaire (17) en communication avec les chambres (7,9,11).

7. Réservoir hydraulique selon l'une quelconque des revendications précédentes **caractérisé en ce que** les moyens (37,36) assurant la communication entre la première, deuxième et troisième chambres pour un niveau de fluide hydraulique supérieur au niveau de sécurité (s) et la séparation de manière étanche desdites chambres pour un niveau de fluide hydraulique inférieur au niveau de sécurité (s) sont formés par des séparations (37) s'étendant de manière étanche de la paroi inférieure (8) vers la paroi supérieure (4) du réservoir (R) sur une hauteur inférieure à la distance entre la partie inférieure (8) du réservoir (R) et la partie supérieure (4) du réservoir (R) et disposées entre les première, deuxième et troisième chambres (7,9,11) et formant entre leur extrémité (38) supérieure et la partie supérieure du réservoir des orifices (36) de communications entre lesdites première, deuxième et troisième chambres (7,9,11).

8. Réservoir selon la revendication 7 **caractérisé en ce que** les séparations (37) s'étendent entre les première, deuxième et troisième chambres (7,9,11) et le canal annulaire (17).

9. Réservoir hydraulique selon l'une quelconque des revendications précédentes **caractérisé en ce que** la troisième chambre (11) comporte pratiquée dans la partie supérieure (4) du réservoir (R) un orifice de retour de liquide de frein destiné à être raccordé à une canalisation de retour du liquide de frein d'un circuit de freinage.

10. Système de freinage électro-hydraulique comportant un organe de freinage du type de celui d'une pédale de frein, des moyens de détection, un calculateur (21) élaborant une consigne de contrôle pour une pompe hydraulique (23) délivrant du liquide de frein à au moins un frein (25) disposé au niveau d'une roue du véhicule suite à la détection par les moyens de détection d'une action du conducteur sur l'organe de freinage, un maître-cylindre relié au frein (25) **caractérisé en ce qu'**il comporte également un réservoir (R) selon l'une quelconque des revendications précédentes.

## Claims

1. Brake-fluid tank for a braking system, comprising a casing, defining an inner space (3), a filling port, at least one outlet port, a first supply chamber (7) for a primary hydraulic circuit, a second supply chamber (9) for a secondary hydraulic circuit, a level sensor for the hydraulic fluid contained in said tank (R), when such level is lower than a minimum level (m), **characterised in that** said tank also comprises a third supply chamber (11) for a hydraulic pump (23), and means for the interconnection of the first, second and third chambers when the hydraulic-fluid level is higher than a safety level (s), and for the fluid-tight separation of said chambers when the hydraulic-fluid level is lower than the safety level (s), the safety level (s) being lower than or equal to the minimum level (m).

2. Tank according to claim 1, **characterised in that** said tank [it] comprises a fourth chamber, [namely] a measuring chamber (13), accommodating the hydraulic-fluid level sensor.

3. Tank according to claim 2, **characterised in that** the fourth chamber (13) is situated substantially centrally in said tank (R).

4. Tank according to claim 2 or 3, **characterised in that** the fourth chamber is separated from the first, second and third chambers (7, 9, 11) by a partition wall (15) provided with passages (14) connecting the first, second and third chambers (7, 9, 11) with said fourth chamber (13).

5. Tank according to claim 4, **characterised in that** the passages (14) are situated between the safety level (s) and the minimum level (m).

6. Tank according to any one of claims 2 to 5, **characterised in that** the fourth chamber (13) is surrounded with an annular passage (17) communicating with the chambers (7, 9, 11).

7. Hydraulic tank according to any one of the preceding claims, **characterised in that** the means (37, 36), intended for the interconnection of the first, second and third chambers when the hydraulic-fluid level is higher than the safety level (s), and for the fluid-tight separation of said chambers when the hydraulic-fluid level is lower than the safety level (s), comprises [consist] of dividing walls (37) extending, in a fluid-tight manner, from the bottom wall (8) towards the top wall (4) of the tank (R), to a height which is smaller than the distance between the bottom wall (8) of the tank (R) and the top wall (4) of the tank (R), said dividing walls being provided between the first, second and third chambers (7, 9, 11) and forming, between their upper ends (38) and the top wall of the tank, interconnecting ports (36) for said first, second and third chambers (7, 9, 11).

8. Tank according to claim 7, **characterised in that** the dividing walls (37) extend between the first, second and third chambers (7, 9, 11) and the annular passage (17).

9. Hydraulic tank according to any one of the preceding claims, **characterised in that** the third chamber (11) comprises a brake-fluid reinjection port, which is provided in the top wall (4) of the tank (R) and intended to be connected with a brake-fluid return line from a braking circuit.

10. Electrohydraulic braking system comprising a braking member, [such as] a brake pedal, detection means, a computer (21) outputting a command for [a] the hydraulic pump (23) to deliver brake-fluid to at least one brake (25) mounted at a wheel of the vehicle, on the detection, by the detection means, of the driver's action on the braking member, and a master cylinder connected to the brake (25), **characterised in that** it also comprises a tank (R) according to any one of the preceding claims.

## Patentansprüche

1. Bremsflüssigkeitsbehälter für ein Bremssystem, mit einem Gehäuse, das ein Innenvolumen (3) definiert, einer Einfüllöffnung, mindestens einer Strömungsöffnung, einer ersten Kammer (7) zur Versorgung eines primären Hydraulikkreises, einer zweiten Kammer (9) zur Versorgung eines sekundären Hydraulikkreises und einem Sensor zur Erfassung eines Füllstands des in dem Behälter (R) enthaltenen Hydraulikfluids, der niedriger ist als ein Mindestfüllstand (m), **dadurch gekennzeichnet, dass** er auch eine dritte Kammer (11) zur Versorgung einer Hydraulikpumpe (23) und Mittel aufweist, die bei einem Hydraulikfluidfüllstand, der höher ist als ein Sicherheitsfüllstand (s), die Verbindung zwischen der ersten, der zweiten und der dritten Kammer gewährleisten und bei einem Hydraulikfluidfüllstand, der niedriger ist als der Sicherheitsfüllstand (s), die dichte Trennung zwischen den Kammern gewährleisten, wobei der Füllstand (s) niedriger ist als der Mindestfüllstand (m) oder diesem entspricht.

2. Behälter nach Anspruch 1, **dadurch gekennzeichnet, dass** er eine vierte Messkammer (13) aufweist, die den Sensor zur Erfassung des Hydraulikfluidfüllstands aufnimmt.

3. Behälter nach Anspruch 2, **dadurch gekennzeichnet, dass** die vierte Kammer (13) im Wesentlichen in der Mitte des Behälters (R) angeordnet ist.

4. Behälter nach Anspruch 2 oder 3, **dadurch gekennzeichnet, dass** die vierte Kammer durch eine Wand (15) von der ersten, zweiten und dritten Kammer (7, 9, 11) getrennt ist, wobei die Wand Kanäle (14) aufweist, die die erste, zweite und dritte Kammer (7, 9, 11) mit der vierten Kammer (13) verbinden.

5. Behälter nach Anspruch 4, **dadurch gekennzeichnet, dass** die Kanäle (14) vergleichsweise zwischen dem Sicherheitsfüllstand (s) und dem Mindestfüllstand (m) angeordnet sind.

6. Behälter nach einem der Ansprüche 2 bis 5, **dadurch gekennzeichnet, dass** die vierte Kammer (13) von einem ringförmigen Kanal (17) umgeben ist, der mit den Kammern (7, 9, 11) verbunden ist.

7. Hydraulikbehälter nach einem der vorhergehenden Ansprüche, **dadurch gekennzeichnet, dass** die Mittel (37, 36), die bei einem Hydraulikfluidfüllstand über dem Sicherheitsfüllstand (s) die Verbindung zwischen der ersten, zweiten und dritten Kammer und bei einem Hydraulikfluidfüllstand unter dem Sicherheitsfüllstand (s) die dichte Trennung der Kammern gewährleisten, durch Abtrennungen (37) gebildet sind, die sich in dichter Weise von der unteren Wand (8) zur oberen Wand (4) des Behälters (R) auf eine Höhe, die geringer ist als der Abstand zwischen dem unteren Abschnitt (8) des Behälters (R) und dem oberen Abschnitt (4) des Behälters (R), erstrecken, zwischen der ersten, zweiten und dritten Kammer (7, 9, 11) angeordnet sind und zwischen ihrem oberen Ende (38) und dem oberen Abschnitt des Behälters Öffnungen (36) zur Verbindung zwischen der ersten, zweiten und dritten Kammer (7, 9, 11) bilden.

8. Behälter nach Anspruch 7, **dadurch gekennzeichnet, dass** sich die Abtrennungen (37) zwischen der ersten, zweiten und dritten Kammer (7, 9, 11) und dem ringförmigen Kanal (17) erstrecken.

9. Hydraulikbehälter nach einem der vorhergehenden Ansprüche, **dadurch gekennzeichnet, dass** die dritte Kammer (11) eine im oberen Abschnitt (4) des Behälters (R) ausgebildete Öffnung für den Rücklauf der Bremsflüssigkeit aufweist, die dazu vorgesehen ist, mit einer Leitung für den Rücklauf der Bremsflüssigkeit eines Bremskreises verbunden zu sein.

10. Elektrohydraulisches Bremssystem mit einem Bremsorgan der Art eines Bremspedals, Erfassungsmitteln, einem Rechner (21), der einen Kontrollsollwert für eine Hydraulikpumpe (23) bildet, die Bremsflüssigkeit zu mindestens einer auf Höhe eines Fahrzeugrads angeordnete Bremse (25) leitet, nachdem die Erfassungsmittel eine Betätigung des Fahrers auf das Bremsorgan erfasst haben, und mit einem mit der Bremse (25) verbundenen Hauptzylinder, **dadurch gekennzeichnet, dass** es auch einen Behälter (R) nach einem der vorhergehenden Ansprüche aufweist.
